# EUROPÄISCHE PATENTSCHRIFT

(11) **EP 0 436 804 B1**
(45) Veröffentlichungstag und Bekanntmachung des Hinweises auf die Patenterteilung: **28.02.1996**
(21) Anmeldenummer: 90121779.4
(22) Anmeldetag: 14.11.1990
(51) Int. Cl.: H01R 31/06

(54) **Elektrische Installationseinheit für die Hausleittechnik**
Electrical installation unit for domestic applications
Unité d'installation électrique pour installations domestiques

(30) Priorität: 11.01.1990 DE 4000623
(43) Veröffentlichungstag der Anmeldung: 17.07.1991
(73) Patentinhaber: GEBRÜDER MERTEN GMBH & CO. KG, D-51643 Gummersbach (DE)
(72) Erfinder: Gringmann, Klaus, W-5270 Gummersbach (DE)
(74) Vertreter: Selting, Günther, Dipl.-Ing.

(56) Entgegenhaltungen:
- EP-A- 0 344 609
- WO-A-88/02190
- GB-A- 2 155 252
- US-A- 4 408 820

## Beschreibung

Die Erfindung betrifft eine elektrische Installationseinheit für die Hausleittechnik der im Oberbegriff des Patentanspruchs 1 angegebenen Art.

Üblicherweise sind Installationseinheiten bei elektrischen Installationen in Form von Steckdosen vorgesehen, an die der Verbraucher mit einem Netzstecker angeschlossen wird. Bei der Hausleittechnik werden die Verbraucher dagegen über Steuerleitungen mit Niederspannung über ein Datenleitungsnetz gesteuert, das unabhängig von dem elektrischen Versorgungsnetz ist. EP 0 344 609 A2 beschreibt ein Hausleitsystem, bei dem ein Datenleitungsnetz vorhanden ist, an das korrespondierende Geräte zum Schalten, Steuern, Regeln, Messen und/oder Überwachen angeschlossen werden können. An den Anschlußstellen des Datenleitungsnetzes ist jeweils eine Universal-Schnittstelle vorhanden, die in der Lage ist, ein Signaltelegramm zu erzeugen und auszusenden oder ein solches Signaltelegramm zu empfangen und auszuwerten. Jede Universal-Schnittstelle ist mit einem gerätespezifischen Adapter versehen, der auf die Funktion des anzuschließenden Gerätes abgestimmt ist. Die Universal-Schnittstellen sind also universell verwendbare Geräte, die von ihrem schaltungstechnischen Aufbau her dazu geeignet sind, mit einer Vielzahl unterschiedlicher externer Gerätetypen zusammenzuwirken. Durch die Kombination der Universal-Schnittstelle mit dem Adapter wird die gesamte Installationseinheit zu einer gerätespezifischen Einheit, die imstande ist, mit einem bestimmten Gerät zusammenzuwirken, wobei dieses Gerät im einfachsten Fall ein Schalter oder eine Anzeigeeinrichtung ist. Das Gerät kann auch ein Meßgerät, Überwachungsgerät oder ein komplexer Befehlsempfänger sein. Bei der Installation des Hausleitsystems werden die Universal-Schnittstellen in Installationsdosen untergebracht und mit dem zuvor verlegten Datenleitungsnetz verbunden. Dieses Datenleitungsnetz kann ein zweiadriges Leitungsnetz sein, über das die Universal-Schnittstellen untereinander korrespondieren können oder das an eine zentrale Steuerschaltung angeschlossen ist, das seinerseits mit jeder der Universal-Schnittstellen korrespondiert. Über das Datenleitungsnetz können sowohl einfache Befehle als auch komplexe Meßwerte oder andere Informationen von einer Universal-Schnittstelle zu einer anderen übertragen werden. Das Datenleitungsnetz kann entweder nach Art einer Baumstruktur ausgebildet sein, wobei Verzweigungsstellen vorhanden sind, von denen Zweigleitungen zu den einzelnen Installationseinheiten (Universal-Schnittstelle mit Adapter) führen, oder nach Art einer Busleitung, an die die Installationseinheiten angeschlossen sind. Der Aufbau des Datenleitungsnetzes ist häufig derart, daß eine Datenleitung, die zu einer Installationseinheit führt, von dieser Installationseinheit bis zu einer anderen Installationseinheit weiterführt. Auf diese Weise können an eine Datenleitung mehrere Installationseinheiten parallel angeschlossen werden. Hierzu muß die einzelne Installationseinheit so ausgebildet sein, daß sie sowohl einen Abzweig als auch die Fortführung der Datenleitungen ermöglicht.

Bei dem bekannten digitalen Signalübertragungssystem für die Hausleittechnik sind die Installationseinheiten so ausgebildet, daß sie an ankommende Datenleitungen angeschlossen werden können, und sie weisen ferner einen Anschluß für weiterführende Datenleitungen auf, die zu einer anderen Installationseinheit führen. Dies hat aber den Nachteil, daß in dem Fall, daß eine Installationseinheit ausgebaut wird, der weiterführende Anschluß unterbrochen wird, so daß alle nachgeordneten Installationseinheiten von dem Datenleitungsnetz abgekoppelt werden. Auch Erweiterungen des Datenleitungsnetzes sind nicht ohne weiteres möglich.

Der Erfindung liegt die Aufgabe zugrunde, eine elektrische Installationseinheit der im Oberbegriff des Patentanspruchs 1 angegebenen Art zu schaffen, die es ermöglicht, das die Schnittstelle enthaltende Gehäuse vorübergehend oder dauernd zu entfernen, ohne daß nachgeordnete Installationseinheiten von der Datenbusleitung abgekoppelt würden, und die auf einfache Weise Systemerweiterungen des Hausleitsystems ermöglicht.

Die Lösung dieser Aufgabe erfolgt erfindungsgemäß mit den im kennzeichnenden Teil des Patentanspruchs 1 angegebenen Merkmalen.

Erfindungsgemäß erfolgt der Anschluß der im Gehäuse angeordneten Schnittstelle an die Datenbusleitung mit einer vom Gehäuse trennbaren Anschlußvorrichtung über Anschlußelemente. Die Anschlußvorrichtung weist ferner Kontaktelemente auf, die mit den Anschlußelementen verbunden sind und an die einerseits die ankommende Datenbusleitung und andererseits mindestens eine abgehende Datenbusleitung anschließbar ist. Durch die Anschlußvorrichtung sind der ankommende Teil und der abgehende Teil der Datenbusleitung ständig untereinander verbunden. Dieselbe Anschlußvorrichtung bewirkt den Abzweig zu der im Gehäuse angeordneten Schnittstelle. Wird das Gehäuse mit der Schnittstelle entfernt, kann die Anschlußvorrichtung in der Installationsdose verbleiben, so daß im Falle des Austausches der Schnittstelle das Datenbusleitungssystem auch nicht vorübergehend unterbrochen werden muß. Dadurch ist sichergestellt, daß die nachgeordneten Installationseinheiten ununterbrochen mit der Datenbusleitung verbunden sind und daß keine übertragenen Daten verlorengehen. Wenn an einer bestimmten Stelle des Hausleitnetzes eine Schnittstelle nicht mehr benötigt wird, kann diese Schnittstelle unter Belassung der Anschlußvorrichtung in der Installationsdose entfernt werden. Andererseits ist es auch möglich, an verschiedenen Stellen, an die zur Zeit noch kein Gerät angeschlossen werden soll, Installationsdosen mit den erforderlichen Anschlußvorrichtungen vorzusehen und die Schnittstelle erst bei späterem Bedarf einzubauen. Hierzu braucht lediglich die Schnittstelle mit der Anschlußvorrichtung verbunden zu werden, ohne daß die durchgehende Datenbusverbindung unterbrochen wird.

Gemäß einer bevorzugten Ausführungsform der Erfindung weist das die Schnittstelle enthaltende Gehäuse Kontaktelemente taktelemente auf, an die die Anschlußvorrichtung ansteckbar ist. Auf diese Weise kann die Anschlußvorrichtung elektrisch mit der Schnittstelle und mechanisch mit dem Gehäuse verbunden werden. Zweckmäßigerweise ist die Anschlußvorrichtung in eine Aussparung des Gehäuses einsetzbar, so daß sie sich in die Gehäusekontur einpaßt.

Die in dem Gehäuse enthaltene Schnittstelle muß nicht notwendigerweise eine Universal-Schnittstelle sein, sondern es kann sich auch um eine auf eine bestimmte Funktion abgestimmte Schnittstelle handeln. Im Falle einer Universal-Schnittstelle ist ein zusätzlicher gerätespezifischer Adapter vorgesehen, der mit der Universal-Schnittstelle zusammenwirkt und mit dieser eine gerätespezifische Installationseinheit ergibt, die beispielsweise zum Messen oder für eine Signalabgabe geeignet ist.

Das Datenbusleitungssystem ist unabhängig von dem elektrischen Versorgungsnetz verlegt. Es dient ausschließlich der Übertragung von Adressen und Datentelegrammen in digitaler Form und wird mit Niederspannung (z.B. 5 V) betrieben.

Im folgenden werden unter Bezugnahme auf die Zeichnungen Ausführungsbeispiele der Erfindung näher erläutert.

Es zeigen:
- Fig. 1: eine perspektivische Darstellung der Installationseinheit von der Rückseite her,
- Fig. 2: eine Explosionsdarstellung der Installationseinheit,
- Fig. 3: eine perspektivische Darstellung der Baugruppe aus Adapter und Betätigungselement,
- Fig. 4: eine Ansicht von Gehäuse und Anschlußvorrichtung aus Richtung des Pfeiles IV von Fig. 1, und
- Fig. 5: eine schematische Darstellung einer weiteren Ausführungsform der Anschlußvorrichtung.

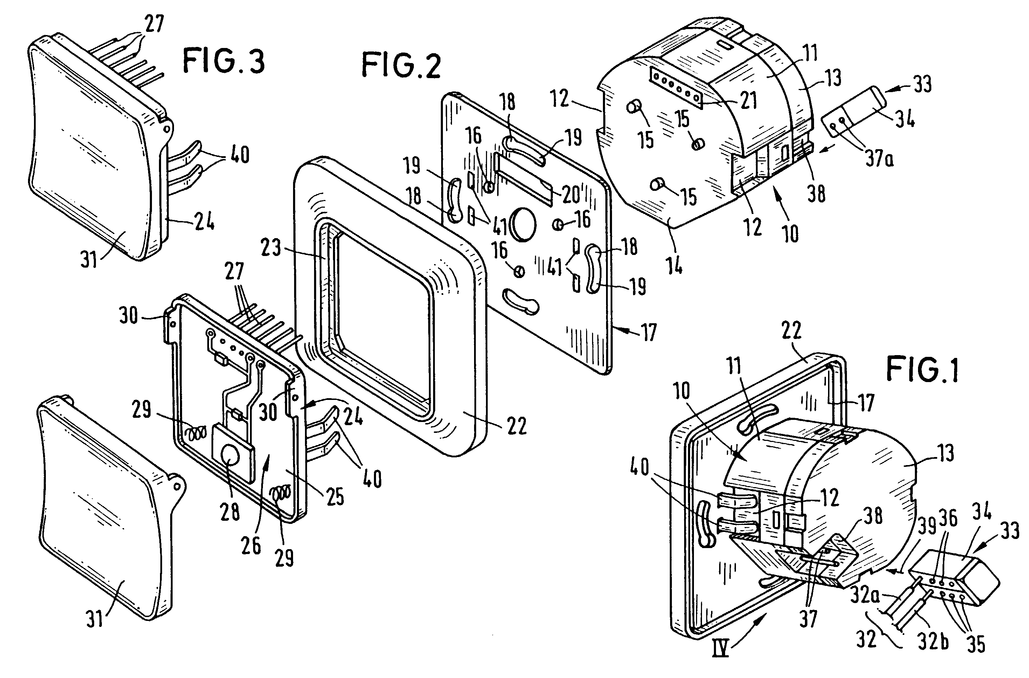

Gemäß Fig. 1 weist die Installationseinheit ein Gehäuse 10 auf, das in einer üblichen Installationsdose, wie sie für Elektroinstallationen benutzt wird, z.B. eine Unterputzdose, eingesetzt werden kann. Die im wesentlichen zylindrische Seitenwand 11 des Gehäuses 10 weist am vorderen Ende an entgegengesetzten Seiten zwei Aussparungen 12 auf, in die noch zu erläuternde Klemmeinrichtungen eingreifen.

Am rückwärtigen Ende ist das Gehäuse 10 durch einen Deckel 13 verschlossen und die Vorderseite ist durch die Bodenwand 14 ebenfalls dicht verschlossen. Das Gehäuse enthält im Inneren eine Universal-Schnittstelle, d.h. eine elektrische Schaltung mit einem Mikroprozessor, Speichern und anderen Komponenten, zu denen auch ein Sende- und Empfangsmodul gehört.

An der nach vorne weisenden Bodenwand 14 des Gehäuses 10 befinden sich Zapfen 15, die in entsprechend angeordnete und bemessene Löcher 16 einer metallischen Tragplatte 17 eingreifen und in diesen Löchern fest verankert sind, so daß die gegen den Boden 14 gesetzte Tragplatte 17 fest mit dem Gehäuse 10 verbunden ist. Die Tragplatte 17 weist im Randbereich Löcher 18 auf, durch die sie mit (nicht dargestellten) Schrauben an der (ebenfalls nicht dargestellten) Installationsdose befestigt werden kann. Von diesen Löchern 18 erstrecken sich bogenförmige Schlitze 19 um den Mittelpunkt der Tragplatte 17 herum. Ferner ist die Tragplatte mit einem länglichen Schlitz 20 versehen, durch den hindurch eine in den Boden 14 des Gehäuses 10 eingelassene Kontaktleiste 21 mit mehreren Kontaktbuchsen zugänglich ist.

Vor der Tragplatte 17 befindet sich ein Blendrahmen 22, wie er von elektrischen Schaltern und Steckdosen her bekannt ist. An der Vorderseite des Blendrahmens 22 ist um die Rahmenöffnung herum ein Aufnahmerand 23 vorgesehen. Gegen diesen Aufnahmerand ist von vorne ein plattenförmiges Tragteil 24 gesetzt, das als Halter für eine Platine 25 dient, die die Schaltung des gerätespezifischen Adapters 26 trägt. An der Rückseite des Tragteils 24 sind Klemmeinrichtungen 40 vorgesehen, die jeweils aus einem Paar gebogener Blattfedern bestehen. Diese Klemmeinrichtungen greifen durch den Rahmen 22 hindurch in entsprechende Löcher 41 der Tragplatte 17 und sie liegen mit ihren Enden in den Aussparungen 12 des Gehäuses 10. Sämtliche vor dem Rahmen 22 liegende Komponenten werden von dem Tragteil 24 gehalten, das auf beschriebene Weise durch den Rahmen 22 hindurch an der Tragplatte 17 schraubenlos befestigt ist. An der Platine 25 ist eine Reihe rechtwinklig abstehender Kontaktstifte 27 angeordnet, welche durch entsprechende Löcher 28 des Tragteils 24 hindurchgehen und sich durch das Loch 20 der Tragplatte 17 hindurch in die Buchsen der Steckerleiste 21 des Gehäuses 10 hinein erstrecken. Auf diese Weise wird der Adapter 26 über die Kontaktstifte 27 mit der Universal-Schnittstelle, die im Gehäuse 10 angeordnet ist, verbunden.

Bei dem vorliegenden Ausführungsbeispiel trägt die Platine 25 außer den Bauteilen des Adapters 26 noch Bauteile des Betätigungselements. Zu diesen Bauteilen gehören ein Mikroschalter 28 und zwei Federn 29. An zwei seitlichen Laschen 30 des Tragteils 24 ist eine Wippe 31 gelagert, die von den Federn 29 nach außen gedrückt wird und die gedrückt werden kann, um den Mikroschalter 28 zu betätigen.

Anstelle des aus den Elementen 28,29 und 31 bestehenden Betätigungselements kann jede Art von anderer Eingabeeinrichtung, Ausgabeeinrichtung oder Anzeigeeinrichtung verwendet werden. Es ist auch nicht erforderlich, daß das Betätigungs- oder Anzeigeelement sich unmittelbar an der Installationseinheit befindet. Vielmehr kann es auch an einem elektrischen Gerät angebracht sein, das über ein Kabel mit der Installationseinheit verbunden ist.

In Fig. 1 ist die Datenbusleitung 32 dargestellt, die mit der im Gehäuse 10 befindlichen Schnittstelle verbunden werden soll und die dieser Schnittstelle auch die elektrische Versorgungsspannung zuführt. Über die Datenbusleitung 32 werden außerdem die Daten von und zu der Schnittstelle übertragen. Die Datenbusleitung 32 besteht aus zwei Adern 32a und 32b.

Die Enden der Adern 32a und 32b sind mit der Anschlußvorrichtung 33 verbunden, die lösbar an dem Gehäuse 10 befestigt ist. Die Anschlußvorrichtung 33 besteht aus einem Block 34 aus Kunststoff, in dem zwei Leiterschienen enthalten sind. Jede der Leiterschienen weist mehrere Anschlußelemente in Form von Buchsen 35 bzw. 36 auf. Die Anschlußelemente befinden sich an einer Seitenwand des Blocks 34. An der Stirnwand des Blocks 34 sind zwei Kontaktelemente 37a in Form von Steckbuchsen angeordnet, in die am Gehäuse 10 vorgesehene stiftförmige Kontaktelemente 37 eindringen können. Über den Block 34 wird die Schnittstelle zweipolig mit der Datenbusleitung 32 verbunden. Die in Fig. 1 unbelegt dargestellten Anschlußelemente 35 und 36 dienen dazu, abgehende Datenbusleitungen anschließen zu können, die zu anderen Installationseinheiten führen. Die Anschlußvorrichtung 33 kann somit zugleich als Verteiler benutzt werden.

Der Block 34 ist in einer entsprechenden Ausnehmung 38 des Gehäuses 10 enthalten, die zur Seitenwand 11 und zur Rückwand offen ist. Die Kontaktelemente 37 verlaufen in Längsrichtung des Gehäuses 10, so daß die Anschlußvorrichtung 32 in Richtung des Pfeiles 39 von hinten in das Gehäuse eingeschoben werden kann, wobei die Anschlußelemente 35 und 36 nach außen weisen. Die Kontaktelemente 37a und die Anschlußelemente 35,36 sind an zueinander rechtwinklig verlaufenden Wänden des Blocks 34 angeordnet, so daß die Anschlußelemente 35,36 auch dann leicht zugänglich und für den Anschluß der Adern 32a,32b freiliegen, wenn der Block 34 in die Ausnehmung 38 eingesetzt ist. Ein Zug an den Adern 32a,32b bewirkt nicht, daß der Block 34 von den Kontaktelementen 37 abgezogen wird.

Die Anschlußelemente 35 und 36 sind Kontaktleisten mit mehreren Löchern, in die jeweils ein Drahtende eingeschoben werden kann. Die Kontaktleisten weisen Federkrallen auf, die ein Zurückziehen des Drahtendes verhindern.

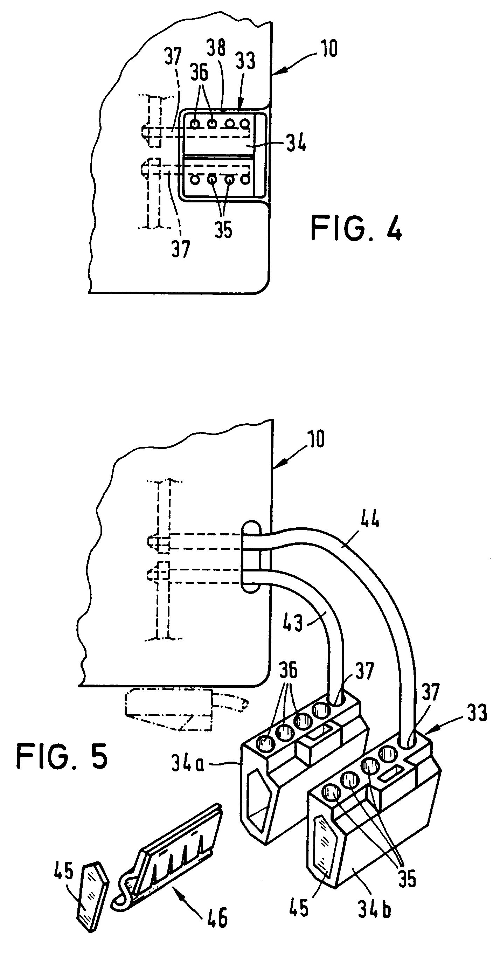

Während bei dem Ausführungsbeispiel der Fign. 1-4 die Anschlußvorrichtung 33 in eine Ausnehmung 38 des Gehäuses 10 eingepaßt ist, ist bei dem Ausführungsbeispiel nach Fig. 5 die Anschlußvorrichtung 33 über Drähte 43,44 mit dem Inneren des Gehäuses 10 verbunden und die Anschlußvorrichtung 33 besteht hierbei aus zwei separaten Blöcken 34a und 34b, von denen jeder für einen Pol der Datenbusleitung vorgesehen ist.

Jeder der Blöcke enthält eine metallische Kontaktleiste 46 mit federnden Anschlußkrallen, die die Drähte festhalten. Zu jedem dieser Löcher der Kontaktleiste 46 führt ein Anschlußelement 35,36 oder ein Kontaktelement 37. Die Anschlußelemente und die Kontaktelemente bestehen bei diesem Beispiel aus untereinander gleichen Buchsen. Wenn das Gehäuse 10 entfernt werden soll, werden die Drähte 43,44 von den Blöcken 34a,34b der Kontaktvorrichtung 33 abgelöst, während die (in Fig. 5 nicht dargestellten) Datenbusleitungen an die Anschlußelemente 35,36 angeschlossen bleiben.

In Fig. 5 ist die Kontaktleiste 46 im herausgenommenen Zustand dargestellt. Der zugehörige Block 34a ist mit einer Stirnwand 45 verschlossen.

Die Blöcke 34a und 34b der Anschlußvorrichtung 33 können mit entsprechenden Klemmeinrichtungen an dem Gehäuse 10 festgelegt werden, so wie es in Fig. 5 strichpunktiert dargestellt ist.

## Patentansprüche

1. Elektrische Installationseinheit für die Hausleittechnik, mit einem in einer Installationsdose montierbaren Gehäuse (10), das eine an eine Datenbusleitung (32) anschließbare Schnittstelle enthält, **dadurch gekennzeichnet**,
daß für den Anschluß der Schnittstelle an die Datenbusleitung (32) eine von dem Gehäuse (10) getrennte oder trennbare Anschlußvorrichtung (33) vorgesehen ist, die für jede Ader (32a,32b) der Datenbusleitung (32) mindestens zwei miteinander verbundene Anschlußelemente (35;36) und ein mit der Schnittstelle lösbar verbundenes Kontaktelement (37a) aufweist.

2. Installationseinheit nach Anspruch 1, dadurch gekennzeichnet, daß die Kontaktelemente (37a) Stifte oder Buchsen sind, die mit komplementären Kontaktelementen (37) des Gehäuses (10) zusammengreifen, und daß die Anschlußvorrichtung (33) aus mindestens einem Block (34) besteht, der durch die zusammengreifenden Kontaktelemente (37,37a) am Gehäuse (10) fixiert ist.

3. Installationseinheit nach Anspruch 2, dadurch gekennzeichnet, daß in der Außenwand des Gehäuses (10) eine Ausnehmung (38) zur passenden Aufnahme des Blocks (34) vorgesehen ist.

4. Installationseinheit nach Anspruch 2 oder 3, dadurch gekennzeichnet, daß die Kontaktelemente (37a) an einer Stirnseite des Blocks und die Anschlußelemente (35,36) an einer Seitenwand des Blocks (34) angeordnet sind.

5. Installationseinheit nach einem der Ansprüche 2-4, dadurch gekennzeichnet, daß die Ausnehmung (38) zur Rückwand und zur Seitenwand des Gehäuses (10) hin offen ist und daß die Kontaktelemente (37) des Gehäuses (10) parallel zur Seitenwand (11) verlaufen.

6. Installationseinheit nach Anspruch 1, dadurch gekennzeichnet, daß die Anschlußvorrichtung (33) aus mindestens einem Block (34a,34b) besteht, der eine Kontaktleiste (46) mit mehreren Löchern zum Einschieben und Festklemmen von Drähten aufweist, wobei die Löcher sowohl die Anschlußelemente als auch die Kontaktelemente bilden.

7. Installationseinheit nach Anspruch 6, dadurch gekennzeichnet, daß ein Loch der Kontaktleiste (46) als Kontaktelement über einen flexiblen Draht (43,44) mit der Schnittstelle verbunden ist.

8. Installationseinheit nach einem der Ansprüche 1-7, dadurch gekennzeichnet, daß das Gehäuse (10) eine Universal-Schnittstelle enthält und an einer Tragplatte (17) befestigt ist, daß ein gerätespezifischer elektrischer Adapter (26) mit einer Klemmeinrichtung (40) an der Tragplatte (17) befestigt und über Kontaktstifte (27) mit der Schnittstelle im Inneren des Gehäuses (10) lösbar verbunden ist.

9. Installationseinheit nach Anspruch 8, dadurch gekennzeichnet, daß die Bauteile des Adapters (26) auf einer Platine (25) angeordnet sind, welche an einem Tragteil (24) befestigt ist, das an seiner Rückseite die Klemmeinrichtung (40) aufweist und an dem eine Betätigungs- oder Anzeigeeinheit (28,29,31) an der Vorderseite angebracht ist.

## Claims

1. An electric installation unit for in-house information distribution network technology, comprising a housing (10) mountable in an installation outlet and including an interface connectable to a data bus line (32),
characterised in
that a connector device (33) is provided for connecting the interface with the data bus line (32), said connector device being separate or separable from the housing (10) and being provided, for each lead (32a, 32b) of the data bus line (32), with at least two interconnected connector elements (35; 36) and a contact element (37a) detachably connected with the interface.

2. The installation unit of claim 1, characterised in that said contact elements (37a) are pins or or sockets that engage with complementary contact elements (37) of said housing (10) and that said connector device (33) consists of at least one block (34) fixed on said housing (10) by said engaging contact elements (37, 37a).

3. The installation unit of claim 2, characterised in that the exterior wall of said housing (10) is provided with a recess (38) for fittingly receiving said block (34).

4. The installation unit of claim 2 or 3, characterised in that said contact elements (37a) are arranged on an end face of said block and said connector elements (35, 36) are arranged on a side wall of said block (34).

5. The installation unit of one of claims 2-4, characterised in that said recess (38) is open towards the rear wall and the side wall of said housing (10) and that said contact elements (37) of said housing (10) extend in parallel to said side wall (11).

6. The installation unit of claim 1, characterised in that said connector device (33) consists of at least one block (34a, 34b) having a contact bar (46) with a plurality of holes for inserting and clamping wires therein, said holes simultaneously forming said connector elements and said contact elements.

7. The installation unit of claim 6, characterised in that one hole of said contact bar (46) is connected as a contact element with said interface via a flexible wire (43, 44).

8. The installation unit of one of claims 1-7, characterised in that said housing (10) includes a universal interface and is fixed to a supporting plate (17), that an apparatus-specific electric adapter (26) is fixed to said supporting plate (17) by means of a clamping means (40) and is detachably connected with said interface within said housing (10) via contact pins (27).

9. The installation unit of claim 8, characterised in that the elements of the adapter (26) are arranged on a printed circuit board (25) which is attached to a supporting member (24) having said clamping means (40) on its rear side and having its front side provided with an actuating or display unit (28, 29, 31).

## Revendications

1. Unité d'installation électrique destinée à la technique domotique, composée d'un boîtier (10) qui peut être monté dans une boîte de câblage, lequel contient une interface qui peut être raccordée à un circuit de bus de données (32),
caractérisé en ce que
l'interface est raccordée au circuit de bus de données (32) par l'intermédiaire d'un dispositif de raccordement (33) séparé ou amovible dans le boîtier (10), lequel est muni d'au moins deux éléments de connexion (35, 36), reliés l'un avec l'autre et destinés à chaque conducteur (32a, 32b) du circuit de bus de données (32), et d'un élément de contact (37a) relié de manière amovible à l'interface.

2. Unité d'installation selon la revendication 1, caractérisée en ce que les éléments de contact (37a) sont des fiches mâles ou des fiches femelles qui se fichent dans des éléments de contact (37) complémentaires du boîtier (10), et en ce que le dispositif de raccordement (33) est formé par au moins un bloc (34), qui est fixé au boîtier (10) par l'intermédiaire des éléments de contact (37, 37a) fichés l'un dans l'autre.

3. Unité d'installation selon la revendication 2, caractérisée en ce que la paroi extérieure du boîtier (10) comprend un évidement (38) qui correspond à la forme du bloc (34) qu'il doit recevoir.

4. Unité d'installation selon la revendication 2 ou 3, caractérisée en ce que les éléments de contact (37a) sont montés sur une paroi frontale du bloc (34) et les éléments de connexion (35, 36) sur une paroi latérale du bloc (34).

5. Unité d'installation selon l'une quelconque des revendications 2 à 4, caractérisée en ce que l'évidement (38) est ouvert en regard de la paroi arrière et de la paroi latérale du boîtier (10) et en ce que les éléments de contact (37) du boîtier (10) sont parallèles par rapport à la paroi latérale (11).

6. Unité d'installation selon la revendication 1, caractérisée en ce que le dispositif de raccordement (33) comprend au moins un bloc (34a, 34b), qui comprend une réglette de contact (46) munie de plusieurs trous destinés à recevoir et à serrer des câbles, ces trous formant non seulement les éléments de connexion, mais aussi les éléments de contact.

7. Unité d'installation selon la revendication 6, caractérisée en ce qu'un trou de la réglette de contact (46) formant un élément de contact est relié à l'interface par l'intermédiaire d'un câble flexible (43, 44).

8. Unité d'installation selon l'une quelconque des revendications 1 à 7, caractérisée en ce que le boîtier (10) est fixé sur une plaque d'appui (17) et contient une interface universelle, en ce qu'un adaptateur (26) électrique spécifique à un appareil est fixé sur la plaque d'appui (17) par un système de serrage (40) et relié à l'interface à l'intérieur du boîtier (10) par l'intermédiaire des fiches mâles (27).

9. Unité d'installation selon la revendication 8, caractérisée en ce que les composants de l'adaptateur (26) sont montés sur une platine (25), qui est fixée à une pièce de support (24), dont la face arrière est munie du système de serrage (40) et contre la face avant de laquelle est monté une unité de commande ou un témoin (28, 29, 31).
